Europäisches Patentamt

European Patent Office

Office européen des brevets

(11) Publication number: **0 285 423**
**A2**

## (12) EUROPEAN PATENT APPLICATION

(21) Application number: **88302897.9**

(22) Date of filing: **31.03.88**

(51) Int. Cl.⁴: **B 23 D 23/00**
**B 23 D 31/00**

(30) Priority: **31.03.87 GB 8707651**

(43) Date of publication of application:
**05.10.88 Bulletin 88/40**

(84) Designated Contracting States: **DE ES FR GB IT**

(71) Applicant: **DANIEL SMITH LIMITED**
**21-23 Eldon Way**
**Biggleswade Bedfordshire, SG18 8NH (GB)**

(72) Inventor: **Whitehouse, Donald William Owen**
**14 Wynchbury Road Quarry Bank**
**Brierly Hill West Midlands DY5 2XU (GB)**

(74) Representative: **Alexander, Thomas Bruce et al**
**Boult, Wade & Tennant 27 Furnival Street**
**London EC4A 1PQ (GB)**

(54) Improvements in or relating to the cutting of continuously fed profiles.

(57) Apparatus (1) for cutting a continuously fed profile (2) into arcuate portions comprises circling means (14) for imparting curvature to the profile such that the profile thereafter travels a substantially circular feed path (20), cutter means (5) for cutting the profile to predetermined arcuate length and drive means (34) for reciprocatingly driving the cutter means along a section of the circular feed path such that the cutter means remains substantially stationary with respect to the profile during a cutting period of each cycle. The drive means comprises an extensible link (31) extending between the cutter means and a mounting (32) and the link is cyclically extended and contracted by means of a rack and pinion gear means (50,45). The use of rack and pinion gear means avoids fluctuation in the length of the arcuate portions thereby produced and enables the portion length to be accurately adjusted. The apparatus is particularly suited to the cutting of bicycle rim profiles.

FIG. 1.

Bundesdruckerei Berlin

**Description**

## IMPROVEMENTS IN OR RELATING TO THE CUTTING OF CONTINUOUSLY FED PROFILES

This invention relates to the cutting of a continuously fed profile into arcuate portions and in particular but not exclusively to apparatus for cutting circumferential lengths of cycle wheel rim profiles.

It is known for a cycle wheel rim to be formed from a metallic strip which is folded and welded to form a closed tubular profile which is adapted to receive a cycle tyre. The mass production of such profiles employs apparatus for cutting a continuously fed profile into arcuate portions each of which comprises a circumference of the cycle wheel and the two ends of the portion being butt welded to complete the wheel.

Cutting apparatus to cut such profiles must produce a clean cut suitable for butt welding substantially without any deformation to the profile in the vicinity of the cut. Cutting apparatus has therefore being employed in which a cutter means travels at the same speed at the profile throughout the period during which cutting takes place. The cutter means has in such apparatus being reciprocatingly driven by a pneumatic ram.

A problem exists with such known apparatus in that the length of arcuate portions produced tends to fluctuate and it is also difficult to adjust the timing of the ram actuation when it is required to produce profile portions of different length.

According to the present invention there is disclosed apparatus for cutting a continuously fed profile into arcuate portions comprising circling means for imparting curvature to the profile such that the profile thereafter travels a substantially circular feed path, cutter means for cutting the profile to predetermined arcuate length and drive means for reciprocatingly driving the cutter means along a section of the circular feed path such that the cutter means remains substantially stationary with respect to the profile during a cutting period of each cycle, which drive means comprises an extensible link extending between the cutter means and a mounting and wherein the link is cyclically extended and contracted by means of a rack and pinion gear means.

An advantage of such apparatus is that the use of rack and pinion gear means allows the position of the cutter means to be determined with precision throughout its travel along the section of feed path.

Preferably the link comprises a housing pivotally mounted about a first axis substantially at right angles to the plane of the feed path and having a guide way receiving an elongate rack member which is longitudinally moveable relative to the housing so as to be extensible therefrom and wherein the rack and pinion gear means comprises a pinion rotatable about the first axis and meshingly engaged with a rack of the rack member such that the link is extensible by rotation of the pinion.

Preferably the cutter means comprises a swinging arm pivotally mounted for reciprocating angular movement about a second axis substantially at right angles to the plane of the feed path and passing through the centre of the circle defined by the feed path and further comprises a pair of opposed jaws which are mounted on the arm and co-engageable to provide cutting action at a radial position corresponding to that of the feed path.

Advantageously both the position of the second axis and the radial position with respect to the second axis at which the jaws are co-engageable are adjustable to accommodate feed paths of different curvature.

Advantageously the apparatus further comprises profile speed sensing means, means for sensing the position and speed of the cutting means and control means for actuating the drive means in response to signals received from the respective sensing means wherein the control means comprises a programmable digital processor.

Conveniently such a drive means further comprises an electric motor connected by a drive shaft to the pinion and the means for sensing the position and speed of the cutting means includes a digital encoder for sensing shaft rotation.

Conveniently the profile speed sensing means comprises a follower wheel in peripheral contact with the profile and a second digital encoder for sensing the rotation of the follower wheel.

According to a further aspect of the present invention there is disclosed a method of cutting a continuously fed profile into arcuate portions by means of apparatus as hereinbefore disclosed and including the steps of accelerating the cutter means along the section of feed path until the speed of the cutter means is substantially equal to that of the profile, moving the cutter means along the section of feed path at constant speed during a cutting period whilst actuating the cutter means to cut the profile, decelerating the cutter means and returning the cutter means to its start position to complete a cycle and repeating the cycle to cut successive arcuate portions of the profile.

Particular embodiments of the present invention will now be described by way of example only and with reference to the accompanying drawings of which:

Figure 1 is part cut away front elevation of a cutting apparatus in accordance with the present invention and indicating two possible positions of the swinging arm and link,

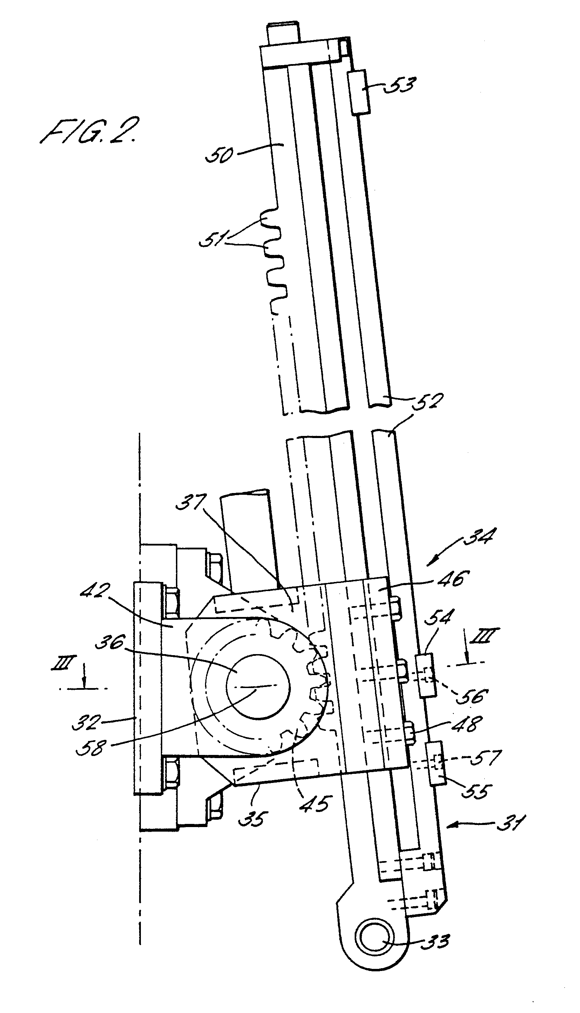

Figure 2 is an enlarged partially sectioned front elevation of part of the apparatus of Figure 1 including the rack and pinion gear means,

Figure 3 is a sectional view taken at arrows III-III of Figure 2,

Figure 4 is a view of the cutter means of the apparatus of Figure 1 viewed in a direction along the feedpath, and

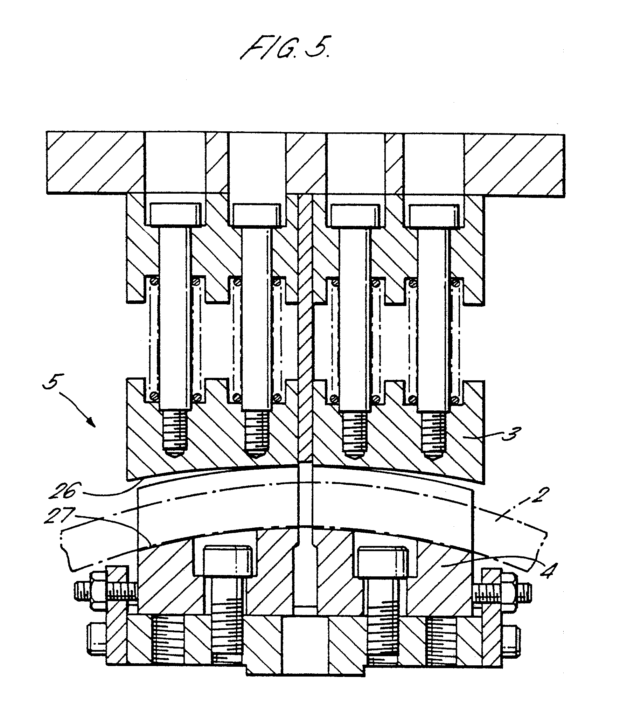

Figure 5 is a sectional view of the cutter means taken at arrows V-V of Figure 4.

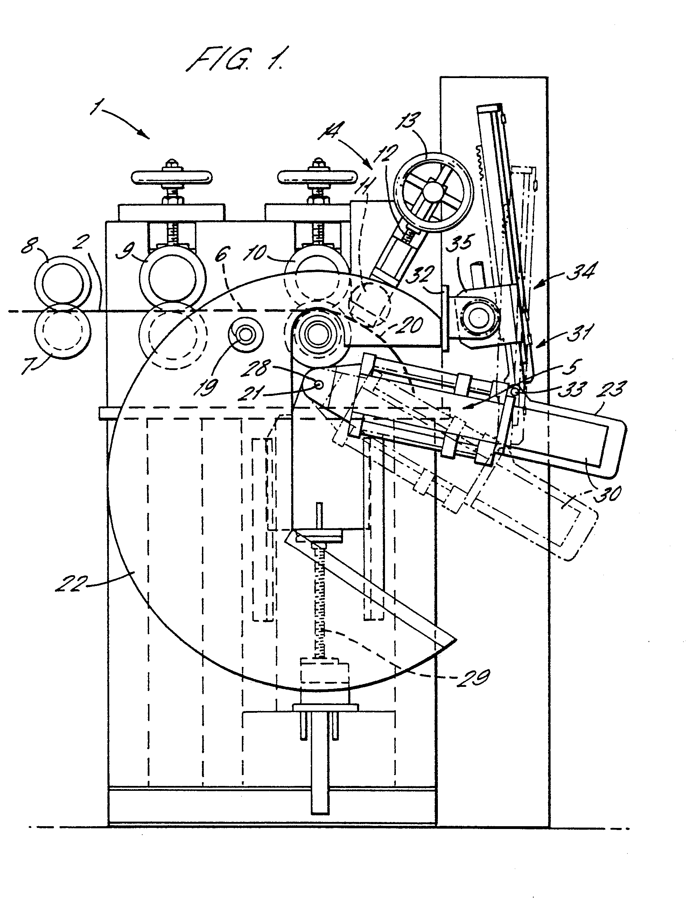

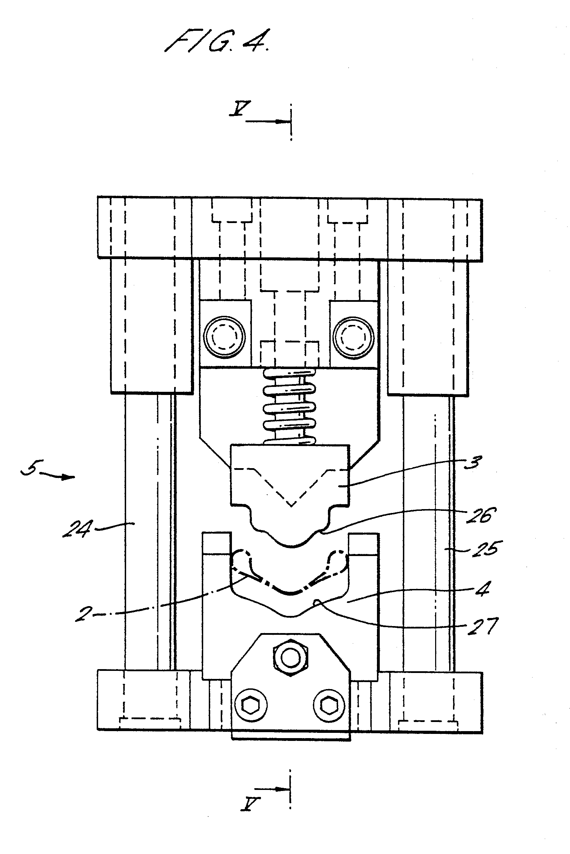

In Figure 1 an apparatus 1 is positioned to receive a continuously fed profile 2 moving from left to right as shown in the drawing and being fed from a profile forming apparatus (not shown) which folds and welds a strip of steel into a closed tubular profile as shown schematically in cross section in Figure 4 where the profile 2 is disposed between opposed jaws 3 and 4 of a cutting means 5.

The profile 2 in Figure 1 initially travels along a straight feed path 6 and is held in contact with a follower wheel 7 by an opposing follower roller 8. The profile 2 is then passed between first and second opposed pairs of guide rollers 9 and 10 which define the straight feed path 6 and then encounters a circling roller 11 which is offset from the straight feed path 6 by an offset amount which is adjustable by means of a screw drive 12 actuated by a circling adjustment wheel 13. The profile 2 is deformed out of its straight form into arcuate form by the presence of the circling roller 11 so that the circling roller, the screw drive 12 and circling adjustment wheel 13 together comprises a circling means 14.

A circular feed path 20 is thereby defined as being the path travelled by the profile after encountering the circling means 14 in the absence of any cutting operation or any further perturbation to its direction of travel. The circular feed path 20 lies in a vertical plane in the apparatus of Figure 1 and is centered on a second axis 21.

A shield 22 of generally helical shape is provided for introducing a slight axial deformation to the profile 2 which is sufficient to prevent a complete circumference of the profile being formed and this shield serves therefore to prevent a leading end of the profile from being re-fed through the second pair of guide rollers and the circling roller 11. A helically threaded support rod 19 is position adjacent to the second pair of guide rollers 10 in order to support the axially deformed arcuate profile and the support rod is rotatable to progressively move the supported profile axially away from the plane of the circular feed path 20.

The cutting means 5 is mounted on a swinging arm 23 which is pivoted about the second axis 21 for swinging movement in the plane of the circular feed path 20. As may be seen in Figure 4 the cutter means 5 is provided with opposed jaws 3 and 4 which are adapted for cutting the profile in a radial plane with respect to the second axis 21, the jaws 3 and 4 being relatively moveable in a direction extending longitudinally with respect to the swinging arm 23. Guide rods 24 and 25 are provided for guiding the longitudinal movement of the jaws 3 and 4.

The jaws 3 and 4 are normally positioned on opposing sides of the circular feed path 20 and include cutting edges 26 and 27 respectively which are contoured so as to conform to the sectional outline of the profile 2 as may be seen in Figure 4.

The swinging arm 23 is pivotal about a swing axle 28 which is adjustable in position relative to the guide roller 9, 10 by means of a swing axle adjuster 29 which is screw operated.

The swing arm 23 incorporates a pneumatic cylinder 30 for actuating the cutter means 5. An extensible link 31 extends between the swinging arm 23 and a fixed mounting 32 on the apparatus 1, the link being pivotally connected to the swinging arm at a pivotal connection 33. The link 31 forms part of a drive means 34 for reciprocatingly driving the cutter means 5 along a section of the circular feed path 20 such that the cutter means remains substantially stationary with respect to the profile during a cutting period of each cycle. The extensible link 31 comprises a housing 35 which is pivotally mounted upon and rotatable with respect to a drive axle 36 which is journaled in the housing 35. The drive axle 36 defines a first axis 58 about which the link 31 is pivoted.

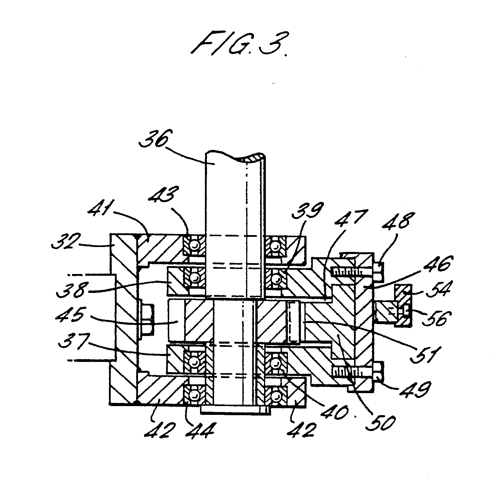

As seen from Figure 3 the housing 35 is generally of U shaped in cross section having opposing arms 37 and 38 in which are received roller bearings 39 and 40 respectively within which the drive axle 36 is rotatable. The housing 35 is nested within the mounting 32 which is of generally U shaped cross section and having opposing arms 41 and 42 which extend in opposition to the arms 37 and 38 of the housing and include roller bearings 43 and 44 respectively within which the drive axle 36 is rotatable.

Pinion 45 is fixedly connected to the drive axle 36 such as to be rotatable between the housing arms 37 and 38. The housing arms 37 and 38 are connected by a plate 46 which is secured to the arms by bolts 48 and 49. The arms 37 and 38 are recessed adjacent the plate 46 such that a guide way 47 of T shaped cross section is defined between the pinion 45, the arms 37 and 38 of the housing and the plate 46. Within the guide way 47 a rack member 50 is located so as to be slidable with respect to the housing 35 and has rack teeth 51 in meshing engagement with the pinion 45.

The rack member 50 is connected at one end by means of the pivotal connection 33 to the swinging arm 23 and extends longitudinally through the housing 35 such that an extensible link 31 is formed between the pivotal connection 33 and the drive axle 36. The drive axle 36 is driven by an electric motor (not shown) and when rotated causes the rack member 50 to be translated with respect to the housing 35 so as to extend or contract the link 31. An indicator arm 52 extends parallel to and is attached at each end of the rack member 50 and is spaced therefrom by a separation greater than the thickness of the plate 46 so as to lie externally with respect to the housing 35. A reference tab 53 is attached to and projects from the indicator arm 52 adjacent the free end of the rack member 50 and first and second moveable tabs are positioned along the length of the indicator arm at positions which are lockable by means of locking screws 56 and 57 respectively. Micro switches (not shown) are positioned adjacent to the housing 35 and are co-operable with the tabs 53, 54 and 55 to provide means for sensing the position of the rack member 50 with respect to the housing 35.

In use to cut an arcuate portion for a cycle rim the profile is fed at a constant speed along the straight feed path 6 and is engaged by the circling roller 11 which imparts a degree of curvature to the profile 2. The profile 2 then follows a circular feed path 20.

The link 31 is initially in its retracted condition so that the swinging arm 23 is raised to its start position as shown in solid lines in Figure 1. The drive axle 36 is then rotated so as to rotate the pinion 45 and translate the rack member 50 in a direction towards the swinging arm 23. The link 31 is extended by this motion and the swing arm 23 begins to swing in a clockwise direction as shown in Figure 1 so that the cutting means 5 carried by the swinging arm travels in a circular manner with its jaws 3 and 4 on opposite sides to the circular feed path 20. The rotation of the drive axle 36 is sensed by a digital shaft encoder (not shown) connected to a digital processor (not shown) which controls the motor driving the drive axle 36 until the speed of the cutter means 5 is matched to the speed of the profile 2 as sensed by a corresponding encoder (not shown) connected to the follower wheel 7. The fixed tab 53 provides a reference for use interpreting the drive shaft encoder output in terms of the absolute position of the rack member 50 during start up.

The cutting means 5 is then actuated by powering the pneumatic cylinder 30 and the profile 2 is cleanly cut in a radially plane with respect to the second axis 21. The speed of the cutter means 5 is maintained constant throughout the cutting period.

At the end of the cutting period the drive axle 36 is decelerated to decelerate the linear motion of the rack member and the motor drive to the drive axle 36 is then reversed to return the link 31 to its original position. The extremities of travel of the link 31 are preselected by positioning the tabs 54 and 55 so that appropriate stop and start signals are generated by the micro switches when these tabs are encountered.

The timing of the cutting operation is controlled by the processor such that a complete circumferential arcuate length of profile 2 is formed at each stage and a succession of such circumferential lengths will be produced at successive cycles of operation. These lengths will be accumulated on the rotating support rod 19 and remove therefrom by an operative or by further mechanical means as required.

The apparatus may be adjusted to produce lengths of different radius in order to provide cycle wheels of different diameter by adjusting the position of the circling roller 11 and correspondingly adjusting the position of the swing axle 28 such that it coincides with the position of the second axis 21 at the center of the circular feed path 20.

Whilst the apparatus is primarily suited to the manufacture of cycle rims it may alternatively be used in the manufacture of arcuate profiles of part circumferential length such as mud guards or the like.

## Claims

1. Apparatus (1) for cutting a continuously fed profile (2) into arcuate portions comprising circling means for imparting curvature to the profile such that the profile thereafter travels a substantially circular feed path (20), cutter means (5) for cutting the profile to predetermined arcuate length and drive means (34) for reciprocatingly driving the cutter means along a section of the circular feed path such that the cutter means remains substantially stationary with respect to the profile during a cutting period of each cycle, which drive means comprises an extensible link (31) extending between the cutter means and a mounting (32) and characterised in that the link is cyclically extended and contracted by means of a rack and pinion gear means (50, 45).

2. Apparatus as claimed in claim 1 wherein the link comprises a housing (35) pivotally mounted about a first axis (58) substantially at right angles to the plane of the feed path and having a guide way (47) receiving an elongate rack member (50) which is longitudinally moveable relative to the housing so as to be extensible therefrom and wherein the rack and pinion gear means comprises a pinion (45) rotatable about the first axis and meshingly engaged with a rack (51) of the rack member such that the link is extensible by rotation of the pinion.

3. Apparatus as claimed in either of claims 1 and 2 wherein the cutter means comprises a swinging arm (23) pivotally mounted for reciprocating angular movement about a second axis (21) substantially at right angles to the plane of the feed path and passing through the centre of the circle defined by the feed path and further comprises a pair of opposed jaws (3, 4) which are mounted on the arm and co-engageable to provide cutting action at a radial position corresponding to that of the feed path.

4. Apparatus as claimed in claim 3 wherein both the position of the second axis and the radial position with respect to the second axis at which the jaws are co-engageable are adjustable to accommodate feed paths of different curvature.

5. Apparatus as claimed in any preceding claim and further comprising profile speed sensing means, means for sensing the position and speed of the cutting means and control means for actuating the drive means in response to signals received from the respective sensing means wherein the control means comprises a programmable digital processor.

6. Apparatus as claimed in claim 5 wherein the drive means further comprises an electric motor connected by a drive shaft (36) to the pinion and wherein the means for sensing the position and speed of the cutting means includes a digital encoder for sensing shaft rotation.

7. Apparatus as claimed in any of claims 5 and 6 wherein the profile speed sensing means comprises a follower wheel (7) in peripheral contact with the profile and a second digital encoder for sensing the rotation of the follower wheel.

8. A method of cutting a continuously fed profile into arcuate portions by means of apparatus as claimed in any preceding claim and comprising the steps of imparting curvature to a continuously fed profile such that the profile thereafter travels a substantially circular feed path, reciprocatingly driving a cutter means along a section of the circular feed path such that the cutter means remains substantially stationary with respect to the profile during a cutting period of each cycle and cutting the profile during the cutting period characterised in that the cutter means is driven by means of an extensible link which is cyclically extended and contracted by drive means including a rack and pinion gear means.

9. A method as claimed in claim 8 in which the position and speed of the cutter means is sensed and digitally encoded, the profile speed is sensed and digitally encoded and the respective digitally encoded signals are input to a programmable processor programmed to actuate the drive means.

FIG. 1.

FIG.2.

0285423

## FIG. 3.

0285423

# FIG. 4.

0285423

FIG.5.